(19) Europäisches Patentamt
European Patent Office
Office européen des brevets

(11) **EP 2 528 337 A1**

(12) **EUROPEAN PATENT APPLICATION**

(43) Date of publication:
**28.11.2012 Bulletin 2012/48**

(51) Int Cl.:
**H04N 13/04** *(2006.01)*  **G02B 27/22** *(2006.01)*

(21) Application number: **12169669.4**

(22) Date of filing: **25.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.05.2011 KR 20110050941**

(71) Applicant: **Samsung Electronics Co., Ltd.**
**Suwon-si, Gyeonggi-do, 443-742 (KR)**

(72) Inventors:
• **Yun, Sang-un**
**Seoul (KR)**
• **Sung, Jun-ho**
**Seoul (KR)**
• **Hwang, Min-cheol**
**Seoul (KR)**

(74) Representative: **Fearnside, Andrew Simon**
**Appleyard Lees**
**15 Clare Road**
**Halifax, HX1 2HY (GB)**

(54) **Dual view display method and dual view driving method for providing plural images to plural users and display apparatus and dual view glasses using the same**

(57) A dual view display method for displaying a first content (440) to a first user and displaying a second content (450) to a second user, a display apparatus (100) having a dual view function, dual view glasses (200) and a method of driving dual view glasses are provided. The dual view display method includes displaying a first frame (410) of the first content; displaying a second frame (420) of the second content; creating a removal frame (430) for the second frame based on the second frame; and displaying the removal frame.

## FIG. 4

USER 1 — WATCHING PICTURE OF USER 1

USER 2 — WATCHING PICTURE OF USER 2

410  425  440  410  420  430  ....  450

On  On  On

EP 2 528 337 A1

## Description

CROSS-REFERENCE TO RELATED APPLICATIONS

This application claims priority from Korean Patent Application No. 10-2011-0050941, filed May 27, 2011, in the Korean Intellectual Property Office, the disclosure of which is incorporated herein by reference in its entirety.

BACKGROUND

**1. Field**

Apparatuses and methods consistent with exemplary embodiments relate to a display method and a display apparatus using the same, and more particularly, to a dual view display method for providing images to a plurality of users and a display apparatus using the same.

**2. Description of the Related Art**

A three-dimensional (3D) stereoscopic image technology can be used in various fields, such as an information technology and telecommunications, broadcasting, medical treatments and related technology, education, training, military affairs, games, animations, virtual reality, computer-aided design, industrial technology, etc. 3D stereoscopic image technology forms a core technology of next generation 3D multimedia information and telecommunications needed in such varied fields.

In general, a 3D effect recognizable by a human is obtained by a combination of a degree of change in thickness of a crystalline lens according to a position of an object to observe, a difference in angle between both eyes with respect to the object, a difference in position and shape of object images as viewed by left and right eyes, respectively, a disparity caused by a movement of the object, an effect due to mental states and memories, and the like.

Among these, the binocular disparity resulting from the spacing of a human's two eyes, approximately 6 to 7 cm in a horizontal direction from each other, forms an important factor of the 3D effect. In other words, each eye of the human who looks at the object, has a difference in angle to the object (i.e., with respect to the other eye) due to binocular disparity. Images seen through the respective eyes are different due to the difference in angle of the two eyes to the object. When the two images are transmitted from respective retinas of each eye to the brain, the brain unites the information of the two images and, as a result, the viewing human perceives an original 3D stereoscopic image.

A stereoscopic image display apparatus is divided into a glass-type display apparatus using special glasses, and a non-glass-type display apparatus, which does not use such special glasses. The glass-type display apparatus is further divided into a color-filter-type display apparatus to divide and select images using color filters complementary to each other, a polarization filter type display apparatus to divide left and right eye images by using an obscuration effect by a combination of orthogonal polarization elements, and a shutter glass type display apparatus to allow a user to feel the 3D effect by alternately shading left and right eye images in response to sync signals for projecting left and right eye image signals on a screen.

Among these, the shutter glass type display apparatus, as a display apparatus using the binocular disparity, allows the user to feel an impression of space due to her brain work to images viewed from different angles by symphonizing an on-off action of left and right eyes in 3D glasses with images provided from the display apparatus.

The shutter glass type display apparatus is also applied in a dual view display system, which provides a plurality of images to a plurality of users.

In the related art dual view display system, to allow each user to see a desired visual point of view, all users should wear corresponding glasses. Thus, there are inconveniences in that the same number of glasses as that of viewers is required, and if in a single view watching situation, the number of views is increased due to an adding of viewers, existing viewers have to additionally wear the corresponding glasses.

In other words, to watch the 3D image, the users should wear 3D glasses. In general, however, a viewing experience of viewing moving images, such as movies, sports and the like, is typically performed by more than two users sharing the viewing experience in a common space, such as a living room, in a house. In this case, there is a problem in that even though one user may want to continue watching the 3D image, while another user expresses her discomfort over watching the 3D image, in the current 3D viewing environment, users cannot select output modes for motion images in which they want to watch, individually. In other words, there is a problem in that if there is one display apparatus in the house, to allow all viewers in the house to share it, a video output mode for one of a 3D video and a two-dimensional (2D) video must be selected.

SUMMARY

Exemplary embodiments may overcome the above disadvantages and other disadvantages not described above. However, exemplary embodiments are not required to overcome the disadvantages described above, and exemplary embodiments may not overcome any of the problems described above.

According to the present invention there is provided an apparatus and method as set forth in the appended claims. Other features of the invention will be apparent from the dependent claims, and the description which follows.

According to an aspect of the invention, there is provided a dual view display method for displaying first content to a first user and displaying second content to a second user, the method including: displaying a first frame of the first content; displaying a second frame of the second content; creating a removal frame for the second frame based on the second frame; and displaying the removal frame.

The creating of the removal frame may include using an inversion frame for the second frame.

The inversion frame may be based on a difference between a predetermined pixel value and a pixel value of the second frame.

The method may further include displaying a luminance frame.

The luminance frame may include a black frame.

The method may further include transmitting a sync signal synchronized with the second frame.

The transmitting of the sync signal may include transmitting the sync signal via radio waves.

The method may further include switching a polarization switching panel to display images having different polarization directions, wherein the switching is performed according to display timings of the first and the second frames.

The first frame may include one of a pair of stereoscopic images of the second frame.

According to another aspect of the invention, there is provided a display apparatus having a dual view function and providing a plurality of images to a plurality of users, the display apparatus including: a display unit configured to alternately output the plurality of images; a sync signal processing unit configured to generate a sync signal which controls whether dual view glasses are opened, and configured to transmit the sync signal to the dual view glasses; and a control unit configured to control a displaying of a removal image which removes an image provided to a user among the plurality of users after the image is displayed, and configured to control the sync signal processing unit to generate the sync signal in synchronization with a display timing of the image provided to the user.

The display unit may alternately output a left eye image and a right eye image, and the control unit may further be configured to control the generating of sync signals by the sync signal processing unit for alternately opening a left shutter glass and a right shutter glass of the dual view glasses in synchronization with display timings of the left eye image and the right eye image, and further configured to control display of the removal image after the left eye image or the right eye image.

The display unit may alternately output a first image for first content and left and right eye images for second content, and the control unit may control the sync signal processing unit to generate sync signals for alternately opening a left shutter glass and a right shutter glass of the dual view glasses in synchronization with display timings of the left and the right eye images, and to display the removal image after the left and the right eye images are displayed.

The removal image may include an inversion image for the image provided to the user.

The apparatus may further include: a calculation unit configured to calculate a maximum value of pixels forming the image provided to the user; a filtering unit configured to calculate a calibrated maximum value of pixels based on maximum values of pixels respectively calculated for a present image and a previous image provided to the user; and a removal image creating unit configured to create the inversion image by computing an output of the filtering unit and the image provided to the user.

The filtering unit may calculate the calibrated maximum value by using a formula: Maxout = Max(View2)pre + Max(View2)cur where View2 is the image provided to the user, Max(View2)pre is a maximum value of pixels for the previous image, and Max(View2)cur is the maximum value of pixels for the present image.

The control unit may control the display unit to display a black image after the removal image is displayed.

The plurality of images may include images having different contents.

According to yet another aspect of the invention, there is provided dual view glasses arranged to communicate with a display apparatus to provide a plurality of images to a plurality of users, the glasses including: a glass unit including a left eye glass and a right eye glass; a driving unit configured to drive the glass unit; a sync signal receiving unit configured to receive a sync signal from the display apparatus; and a control unit configured to control the driving unit to change a state where the glass unit is opened or closed according to the sync signal received from the sync signal receiving unit, wherein the sync signal is arranged to open the dual view glasses in synchronization with a display timing of an image provided to a user of the plurality of users.

The glasses may further include: a mode setting unit configured to set an operation mode of the glass unit into one of a three-dimensional mode and a dual view mode, wherein the control unit is arranged to control the driving unit to change the state where the glass unit is opened or closed according to the operation mode set by the mode setting unit.

According to a further aspect of the invention, there is provided a dual view display method for providing a plurality of images to a plurality of users, the method including: alternately displaying the plurality of images, displaying a removal image for removing an image provided to a user of the plurality of users after the corresponding image is displayed; and generating a sync signal for opening dual view glasses in synchronization with a display timing of the image provided to the user to transmit the sync signal to the dual view glasses.

The alternate displaying of the plurality of images may include alternately outputting a left eye image and a right eye image, and displaying the removal image after the left eye image or the right eye image are displayed, wherein the generating of the sync signal includes generating and transmitting sync signals for alternately opening a left shutter glass and a right shutter glass of the dual view glasses in synchronization with display timings of the left eye image and the right eye image.

The alternate displaying of the plurality of images may include alternately outputting an image for first content and left and an right eye images for second content, and displaying the removal image after the left and the right eye images are displayed, wherein the generating of the sync signal includes generating and transmitting sync signals for alternately opening a left shutter glass and a right shutter glass of the dual view glasses in synchronization with display timings of the left and the right eye images.

The removal image may include an inversion image for the image provided to the user.

The method may further include: calculating a maximum value of pixels forming the image provided to the user; calculating a calibrated maximum value of pixels based on maximum values of pixels calculated to a present image and a previous image provided to the user; and creating the inversion image by computing the calibrated maximum value of pixels and the image provided to the user.

The calculating of the calibrated maximum value may include calculating the calibrated maximum by using a formula: Maxout = Max(View2)pre + Max(View2)cur where View2 is the image provided to the user, Max(View2)pre is the maximum value of pixels for the previous image provided to the user, and Max(View2)cur is the maximum value of pixels for the present image.

The method may further include: displaying a black image after the removal image is displayed.

The plurality of images may include images having different contents.

According to a yet further aspect of the invention, there is provided a method of driving dual view glasses operated in combination with a display apparatus having a dual view function for providing a plurality of images to a plurality of users, the method including: receiving a sync signal from the display apparatus; and driving a glass unit including a left eye glass and a right eye glass to change a state where the glass unit is opened or closed according to the received sync signal, wherein the sync signal includes a signal for opening the dual view glasses in synchronization with a display timing of an image provided to a user among the plurality of users.

The method may further include: setting an operation mode of the glass unit into one of a three-dimensional mode and a dual view mode; and driving the glass unit to change the state where the glass unit is opened or closed according to the set operation mode.

According to an aspect of another exemplary embodiment, there is provided a dual view display method for displaying 2D content to a first user and displaying 3D content to a second user, the method including: displaying a frame of the 2D content; displaying a first frame of the 3D content; and displaying a first removal frame based on the first frame of the 3D content.

The removal frame may be an inversion frame based on a difference between a predetermined pixel value and a value of a pixel in the first frame of the 3D content.

The method may further include displaying a second frame of the 3D content.

The method may further include displaying a second removal frame based on the second frame of the 3D content.

The first frame of the 3D content may correspond to a left eye image frame, and the second frame of the 3D content corresponds to a right eye image frame.

The method may further include generating sync signals for alternately opening a left eye shutter glass and a right eye shutter glass in synchronization with the displaying of the left eye image and the right eye image, respectively.

BRIEF DESCRIPTION OF THE DRAWINGS

The above and/or other aspects will become more apparent by describing certain exemplary embodiments with reference to the accompanying drawings, in which:

FIG. 1 is a view showing a display system according to an exemplary embodiment;

FIG. 2 is a block diagram showing a configuration of a display apparatus according to an exemplary embodiment;

FIG. 3A is a block diagram for explaining a detailed configuration of the display apparatus according to the exemplary embodiment;

FIG. 3B is a block diagram for explaining a detailed configuration of an image processing unit of the display apparatus according to the exemplary embodiment;

FIGS. 4 to 6 are views for explaining images displayed according to various exemplary embodiments, respectively;

FIG. 7 is a view for explaining a method in which a black image is displayed according to an exemplary embodiment;

FIGS. 8A and 8B are block diagrams showing configurations of dual view glasses according to various exemplary embodiments, respectively;

FIG. 8C is a view for explaining an operation mode of dual view glasses according to an exemplary embodiments;

FIG. 9 is a flowchart for explaining a control method of the display apparatus according to an exemplary embodiment; and

FIG. 10 is a flowchart for explaining a method for providing a dual view mode according to an exemplary embodiment.

DETAILED DESCRIPTION OF EXEMPLARY EMBODIMENTS

Exemplary embodiments are described in greater detail below with reference to the accompanying drawings.

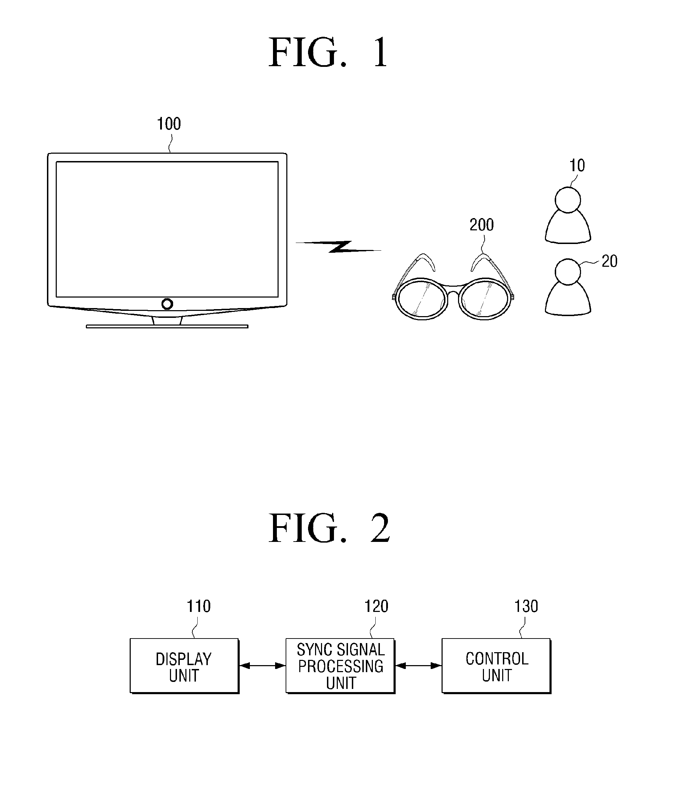

FIG.1 is a view showing a display system according to an exemplary embodiment. As shown in FIG. 1, the display system according to the exemplary embodiment includes a display apparatus 100 to support a dual view mode, and dual view glasses 200 for watching images according to the dual view mode.

Since the images are made up of frames, the images described hereinafter may mean the frames and to make the explanations easier, they will be described standardizing as the images.

The dual view mode means a mode where images having different contents are provided to a plurality of users, respectively, that is, a mode where a first content and a second content are displayed to a first user and a second user, respectively. Through this, the plurality of users can watch images that they want to view through one display apparatus.

For this, the display apparatus 100 time-shares an image (or frame) to be provided to the first user 10 and an image (or frame) to be provided to the second user 20, and alternately outputs them. After the image (or frame) to be provided to the second user 20 is displayed, the display apparatus displays a removal image for removing the displayed corresponding image (or frame). Here, the removal image as an image for offsetting the image provided to the second user 20 may be an inversion image for the image provided to the second user 20.

According to this, since the image provided to the second user 20 is seen as being offset to the first user 10 who does not wear the dual view glasses 200, the first user 10 does not recognize the image provided to the second user 20, but can watch only an image that she wants to.

In addition, the display apparatus 100 generates a sync signal for opening the dual view glasses 200 in synchronization with display timing of the image provided to the second user 20 and transmits it to the dual view glasses 200. And the dual view glasses 200 opens glasses on the basis of the sync signal generated at the display apparatus 100.

According to this, the second user 20 who wears the dual view glasses 200 can watch only an image provided to her.

In other words, according to the display system as described above, if an existing user (the first user) does not wear a separate glasses for dual view mode and only an additional user (the second user) wears the glasses for dual view mode, each of the plurality of users can watch only the image that she wants to.

FIG. 2 is a block diagram showing a configuration of the display apparatus according to an exemplary embodiment. Referring to FIG. 2, the display apparatus 100 according to the exemplary embodiment includes a display unit 110, a sync signal processing unit 120, and a control unit 130.

The display unit 110 alternately outputs the plurality of images to be provided to the plurality of users, respectively. In other words, the display unit 110 may alternately display a first frame with first content to be provided to the first user and a second frame with second content to be provided to the second user.

In this case, the plurality of images may be the same types of images (2D image and 2D image) for different contents, different types of images (2D image and/or 3D image) for the same content, or different types of images (2D image and 3D images) for different contents.

If providing the same types of images for different contents, the display unit 110 may alternately output an image for first content and an image for second content, and if providing the different types of images for same content, a pair of stereoscopic images, that is, a left eye image and a right eye image, for corresponding content. Also, if providing the different types of images for different contents, the display unit 110 may alternately output an image for first content and left and right eye images for second content.

The sync signal processing unit 120 may generate a sync signal for controlling whether the dual view glasses is opened or closed, and transmit it to the dual view glasses. In other words, the sync signal processing unit 120 may generate a sync signal synchronized with an image to be provided to a user who wears the dual view glasses, and transmit it to the dual view glasses.

The control unit 130 controls general operations for all sorts of components included in the display apparatus 100.

Particularly, if providing the same types of images for different contents, the control unit 130 may display a removal image for removing an image provided to a certain user among the plurality of users after the corresponding image is displayed.

In this case, the control unit 130 may control the sync signal processing unit 120 to generate the sync signal for controlling whether the dual view glasses is opened or closed and to transmit it to the dual view glasses.

Further, if providing the different types of images for same content, the control unit 130 may display a removal image after an left eye image or a right eye image is displayed, thus to allow other user not to recognize any one of the left eye image and the right eye image.

In this case, the control unit 130 may control to generate sync signals for alternately opening a left eye shutter glass and a right eye shutter glass of the dual view glasses in synchronization with display timings of the left eye image and the right eye image thus to allow the certain user to recognize a 3D image corresponding to the left eye image and the right eye image.

Also, if providing the different types of images for different contents, the control unit 130 may display a removal image after left and right eye images for certain content are displayed thus to allow other user not to recognize the left and the right eye images.

In this case, the control unit 130 may control to generate sync signals for alternately opening the left eye shutter glass and the right eye shutter glass of the dual view glasses in synchronization with display timings of the left and the right eye images thus to allow the certain user to recognize a 3D image corresponding to the left and the right eye images for certain content.

Here, the removal image may be an inversion image for the image provided to the certain user.

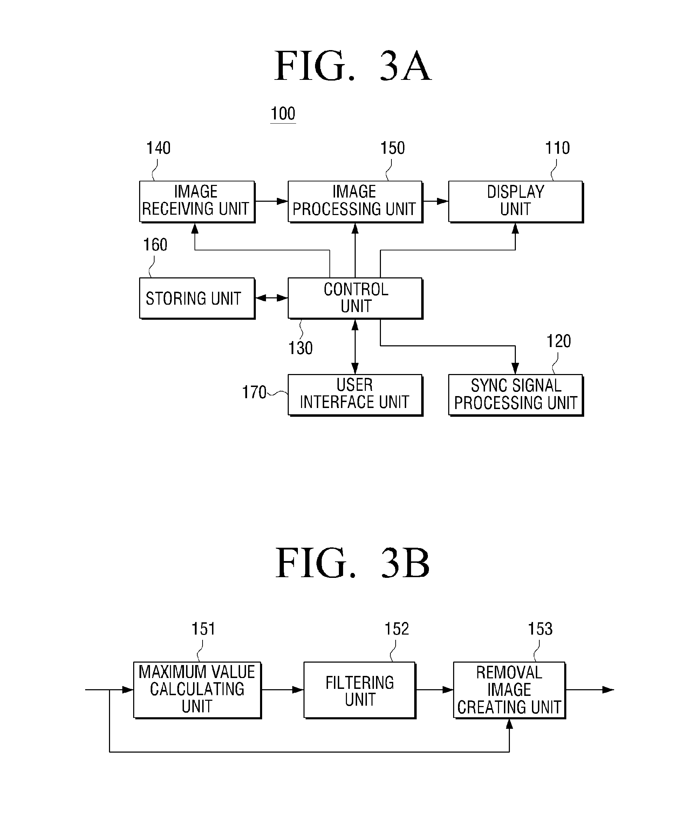

Hereinafter, the display apparatus 100 according to the exemplary will be described in more detail with reference to FIGS. 3A and 3B.

FIG. 3A is a block diagram for explaining a detailed configuration of the display apparatus according to the exemplary embodiment. Referring to FIG. 3, the display apparatus 100 according to the exemplary embodiment includes a display unit 110, a sync signal processing unit 120, a control unit 130, an image receiving unit 140, an image processing unit 150, a storing unit 160, and a user interface unit 170.

The image receiving unit 140 receives a 2D image signal or 3D image signal for content emitted by wire or radio waves from a broadcasting station or a satellite and demodulates it. Here, the 3D image may be a 3D image transmitted from a photographing apparatus such as a camera or the like, or a 3D image emitted from the broadcasting station after photographed by the camera and then edited and treated at the broadcasting station.

In addition, the image receiving unit 140 may be connected to an outer appliance to receive the 2D image or the 3D image for content therefrom. In this case, the outer appliance may be connected by radio, or by wire through an interface, such as S-Video, Component, Composite, D-sub, DVI, HDMI, or the like.

The image receiving unit 140 transmits the received 2D or 3D image to the image processing unit 150.

The image processing unit 150 performs a signal processing, such as a video decoding, a format analysis, a video scaling or the like, and a task, such as a graphic user interface (GUI) adding or the like, to the 2D image or the 3D image received from the image receiving unit 140.

Particularly, the image processing unit 150 time-shares images to be provided to the plurality of users, respectively, and transmits them to the display unit 110. Here, if a content to be provided to a certain user is embodied as the 3D image, the image processing unit 150 time-shares a pair of stereoscopic images for corresponding content, that is, a left eye image and a right eye image, and transmits them to the display unit 110.

Further, the image processing unit 150 may create a removal image for removing the image provided to the certain user. Here, the removal image may be an inversion image for the image provided to the certain user. In other words, the image processing unit 150 may create the inversion image as a difference between a predetermined pixel value and a value of pixels forming the image provided to the certain user.

For this, as shown in FIG. 3B, the image processing unit 150 may further include a maximum value calculating unit 151, a filtering unit 152 and a removal image creating unit 153.

The maximum value calculating unit 151 may calculate a maximum value of pixels forming the image provided to the certain user, that is, the user who wears the dual view glasses, among the plurality of users.

Also, when calculating the maximum value, if the pixels forming the image are dispersed according to brightness and distributed in a plurality of regions, the maximum value calculating unit 151 may consider the number of pixels distributed in the respective regions. For instance, the maximum value calculating unit 151 may calculate a maximum value for pixel value in a region where a large number of pixels are distributed according to the brightness.

The filtering unit 152 may calculate a calibrated maximum value on the basis of the maximum value calculated to a present image and a previous image at the maximum value calculating unit 151. According to this, due to a radical change in maximum value, a flicker can be prevented from being generated.

In particular, the filtering unit 152 may calculate the calibrated maximum value by adding a predetermined weighing on the maximum value calculated to the present image and the previous image or calculating an average value thereof.

For instance, the filter unit 152 may calculate the calibrated maximum value by using the following mathematic formula 1:

【mathematic formula 1】

$$Max_{out} = Max(View2)_{pre} + Max(View2)_{cur}$$

Here, View2 is the image provided to the certain user, $Max(View2)_{pre}$ is the maximum value of pixels for the previous image, and $Max(View2)_{cur}$ is the maximum value of pixels for the present image.

The removal image creating unit 153 may create an inversion image by computing a difference between an output of the filtering unit 152 and the image provided to the certain user. In other words, the removal image creating unit 153 may create the inversion image by a difference between the calibrated maximum value and the value of pixels forming the image provided to the certain user.

Although in the exemplary embodiment described above, the image processing unit has been explained as including the filtering unit 152, the present invention is not limited thereto, and it may be configured, so that an output of the maximum value calculating unit 151 is directly inputted to the removal image creating unit 153 thus to allow the removal image creating unit 153 to create the inversion image by the difference between the inputted maximum value and the value of pixels forming the image provided to the certain user.

Referring again to FIG. 3A, the image processing unit 150 may create a specific luminance image and transmit it to the display unit 110. For instance, the image processing unit 150 may create a black image in which all pixels of one frame are composed of black data.

The display unit 110 displays the image received from the image processing unit 150. To be specific, the display unit 110 may alternately output images, which are provided to the plurality of users, respectively. In this case, the display unit 110 may output the removal image and the black image together.

The storing unit 160, as a storing medium storing all sorts of programs required in operating the display apparatus 100, may be embodied by a memory, a hard disk drive (HDD) or the like. For instance, the storing unit 160 may include a ROM storing a program for performing an operation of the control unit 130, and a RAM for temporarily storing data generated according to the operation of the control unit 130. In addition, the storing unit 160 may further include an electrically erasable and programmable ROM (EEPROM).

The user interface unit 170 transmits a user command inputted from an input apparatus, such as a remote controller, an input panel or the like, to the control unit 130. Particularly, the user interface unit 170 allows each user to input a user command for setting the dual view mode providing different images to the plurality of users and a user command for selecting a content that she wants to watch in the dual view mode.

Under the control of the control unit 130, the sync signal processing unit 120 creates a sync signal for controlling whether the dual view glasses is opened or closed and transmits it to the dual view glasses. This is to allow a certain user who wears the dual view glasses 200 to watch only a certain image. Here, the sync signals may be transmitted in an infrared form.

The control unit 130 controls a general operation of the display apparatus 100 according to the user command received from the user interface unit 170 or a predetermined option.

In particular, the control unit 130 controls the image receiving unit 140 and the image processing unit 150 to separate a received 3D image into a left eye image and a right eye image, and to scale or interpolate the separated left and right images in sizes capable of being displayed on one picture, respectively. In addition, the control unit 130 may control the image processing unit 150 to convert a received 2D image into a 3D image.

Further, the control unit 130 controls the sync signal processing unit 120 to create sync signals for opening shutter glasses of the dual view glasses 200 in synchronization with display timings of the images provided to the certain user and transmit them to the dual view glasses 200.

Also, the control unit 130 may transmit the images processed or created at the image processing unit 150 to the display unit 110 according to a predetermined order.

In particular, the control unit 130 may transmit the images to be provided to the plurality of users, the removal image and the black image to the display unit 110 in the predetermined order according to the types of images that respective users want to watch.

On the other hand, it has already been described above that the plurality of images provided to the plurality of users, respectively, correspond to the same types of images (2D image and 2D image) for different contents, the different types of images (2D image and/or 3D image) for same content, or the different types of images (2D image and 3D images) for different contents. Hereinafter, the respective cases as described above will be explained in more detail.

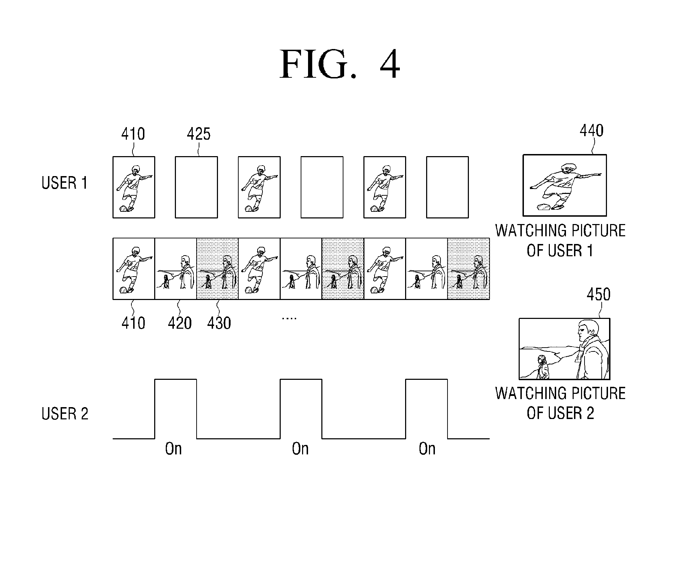

A first exemplary case in which the plurality of images provided to the plurality of users, respectively, is the same types of images (2D image and 2D image) for different contents is explained in detail with reference to FIG. 4.

In a dual view mode according to the above example, it is assumed as an occasion that a first user does not wear the dual view glasses and a second user wears the dual view glasses, and that the first user wants to watch an image for first content and the second user wants to watch an image for second content.

The control unit 130 controls to time-share a 2D image 410 for first content to be provided to the first user and a 2D image for second content to be provided to the second user and to alternately transmit them to the display unit 130.

Further, after transmitting the 2D image 420 to be provided to the second user, the control unit 130 controls to transmit a removal image 430 for removing the 2D image provided to the second image.

In other words, the control unit 130 controls to transmits the images to the display unit 110 in a chronological order of 'the 2D image 410 to be provided to the first user → the 2D image 420 to be provided to the second user → the removal image 430 for the 2D image 420 provided to the second user → ......'.

Accordingly, since the 2D image 420 that the second user wants to watch is offset by the removal image 430, the first user who does not wear the dual view glasses can watch only an image 440 that she wants to.

Also, the control unit 130 may control the sync signal processing unit 120 to generate a sync signal synchronized with a display timing of the 2D image provided to the second user.

In other words, as shown in FIG. 4, the control unit 130 controls to generate the sync signal processing unit 120 to generate a sync signal for opening (ON) shutter glasses of the dual view glasses 200 in synchronization with the display timing of the 2D image 420 provided to the second user and to transmit it to the dual view glasses 200. In this case, a left eye glass and a right eye glass of the dual view glasses 200 are simultaneously opened.

According to this, the second user who wears the dual view glasses 200 can watch only an image 450 that she wants to.

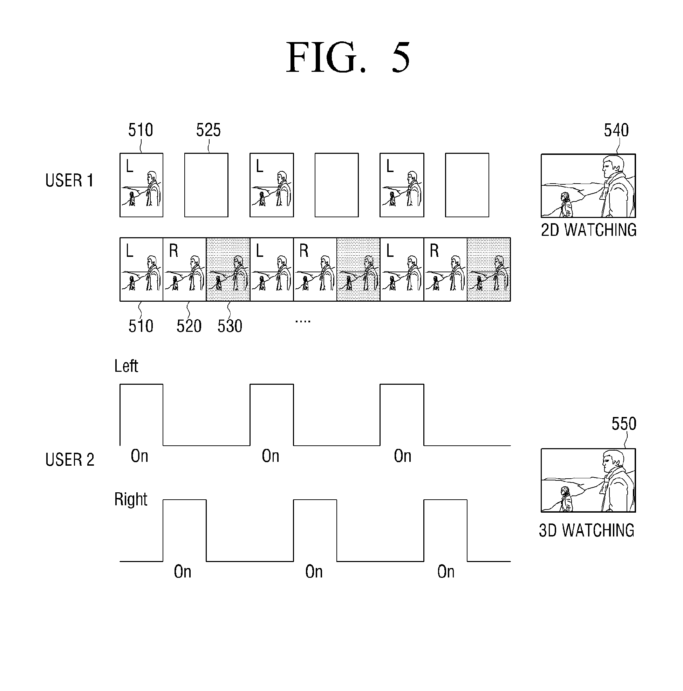

A second exemplary case in which the plurality of images provided to the plurality of users, respectively, is the different types of images (2D image and/or 3D image) for same content is explained in detail with reference to FIG. 5.

Even in the above example, it is assumed as an occasion that a first user does not wear the dual view glasses and a second wears the dual view glasses, and that the first user wants to watch a 2D image for specific content and the second user wants to watch a 3D image for same content.

The control unit 130 controls to time-share a left eye image 510 and a right eye image 520 of the 3D image corresponding to the specific content processed at the image processing unit 150 and to alternately transmit them to the display unit 130. Further, after transmitting the left eye image 510 or the right eye image 520, the control unit 130 controls to transmit a removal image 530 thus to allow the first user not to recognize any one of the left eye image 510 and the right eye image 520.

In other words, as in FIG. 5, the control unit 130 controls to transmits the images to the display unit 110 in a chronological order of 'the left eye image 510 of the 3D image corresponding to the specific content → the right eye image 520 of the 3D image corresponding to the specific content → the removal image 530 for the right eye image 520 → ...'.

Accordingly, since the right eye image 520 of the 3D image corresponding to the specific content is offset by the removal image 530, the first user who does not wear the dual view glasses watches only the left eye image for specific content, so that she can watch a 2D image 540 for specific content that she wants to.

Also, the control unit 130 may control to generate sync signals for alternately opening the left eye shutter glass and the right eye shutter glass of the dual view glasses in synchronization with display timings of the left eye image and the right eye image thus to allow the second user to recognize the 3D image according to the left eye image and the right eye image.

According to this, the second user who wears the dual view glasses 200 can watch only a 3D image 540 for specific content.

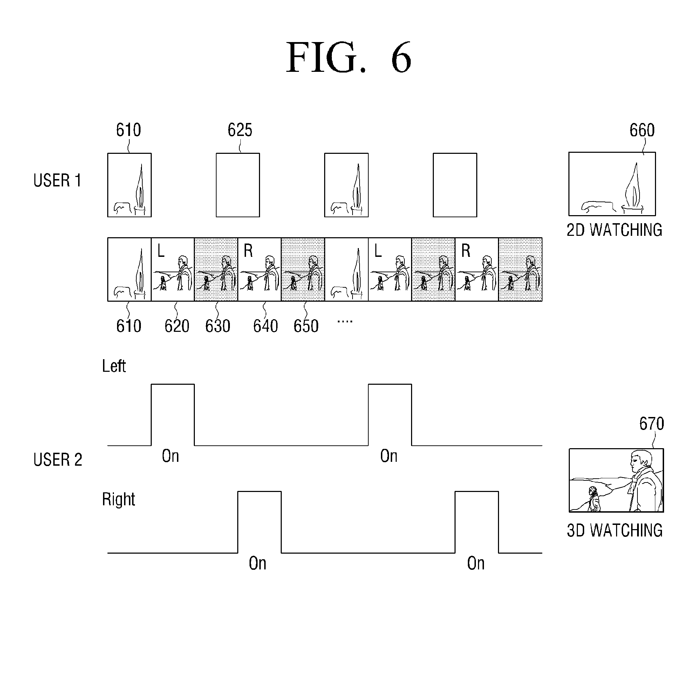

A third exemplary case in which the plurality of images provided to the plurality of users, respectively, is such that different types of images (i.e., a 2D image and a 3D image) for different contents is explained in detail with reference to FIG. 6.

Even in the above example, it is assumed as an occasion that a first user does not wear the dual view glasses and a second wears the dual view glasses, and that the first user wants to watch a 2D image for first content and the second user wants to watch a 3D image for second content.

The control unit 130 controls to time-share a 2D image 610 corresponding to the first content and a 3D image 620 and 640 corresponding to the second content processed at the image processing unit 150 and to alternately transmit them to the display unit 130. In this case, a left eye image 620 and a right eye image 640 of the 3D image corresponding to the second content are controlled to be alternately transmitted to the display unit 130.

Further, after displaying the left eye image 620 and the right eye image 640, the control unit 130 may control to display corresponding removal images, respectively, thus to allow the first user not to recognize the left eye image 620 and the right eye image 640 for second content. That is, the control unit 130 may control to transmit the left eye image 620 to the display unit 110 and then transmit a removal image 630 for the left eye image 620 thereto and to transmit the right eye image 640 to the display unit 110 and then transmit a removal image 650 for the right eye image 640 thereto.

In other words, as shown in FIG. 6, the control unit 130 controls to transmits the images to the display unit 110 in a chronological order of 'the 2D image 610 corresponding to the first content → the left eye image 620 of the 3D image corresponding to the second content → the removal image 630 for the left eye image 620 → the right eye image 640 of the 3D image corresponding to the second content → the removal image 650 for the right eye image 640 → ...'.

Accordingly, since the left and right eye images of the 3D image corresponding to the second content are offset by the removal images 630 and 650, the first user who does not wear the dual view glasses can watch only a 2D image 660 for first content.

Also, the control unit 130 may control to generate sync signals for alternately opening a left eye shutter glass and a right eye shutter glass of the dual view glasses in synchronization with display timings of the left eye image and the right eye image thus to allow the second user to recognize the 3D image according to the left eye image and the right eye image for second content.

According to this, the second user who wears the dual view glasses 200 can watch only a 3D image 670 for second content.

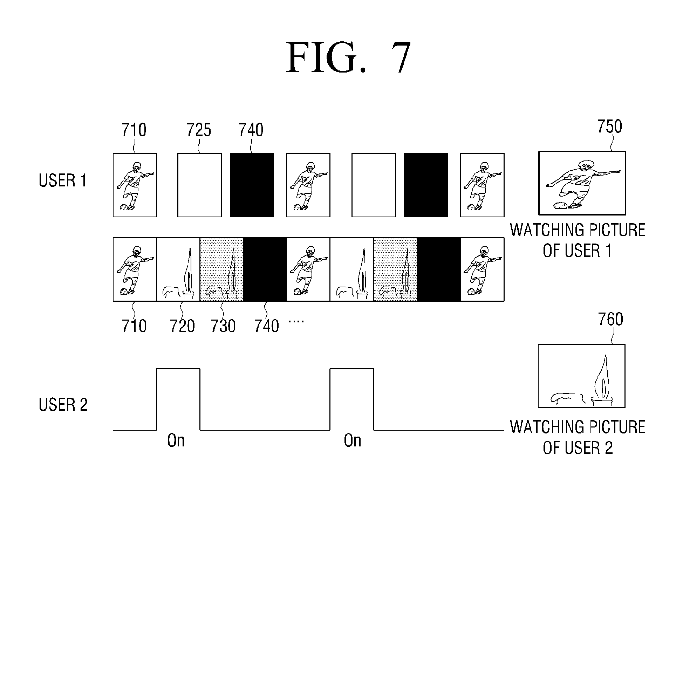

FIG. 7 is a view for explaining a method in which a black image is displayed according to an exemplary embodiment. Since a configuration of the exemplary embodiment of FIG. 7 is the same as that of the exemplary embodiment explained in FIG. 4 except for an inserting of black images, explanations thereon overlapped with those in FIG. 4 will be omitted.

The control unit 130 controls to transmit a black image 740 to the display unit 110 after transmitting a removal image 730 for removing the image provided to the second user thereto

In other words, as shown in FIG. 7, the control unit 130 controls to transmits the images to the display unit 110 in a chronological order of 'an image 710 to be provided to the first user → an image 720 to be provided to the second user → the removal image 730 for the image provided to the second user → the black image 740 → ...'.

Inserting the black image 740 as described above is to prevent deteriorations in contrast and chroma, which are capable of being generated as the image 720 provided to the second user is offset by using the removal image 730.

On the other hand, although the exemplary embodiment as described above has been explained only the method in which when the same types of images (2D image and 2D image) for different contents are provided to the user, the black images are inserted, it is only one instance out of many.

It goes without saying that even when the different types of images (2D image and/or 3D image) for same content or the different types of images (2D image and 3D images) for different contents are provided to the user, the black images may be inserted. In this case, the black images may be inserted after the removal images, respectively.

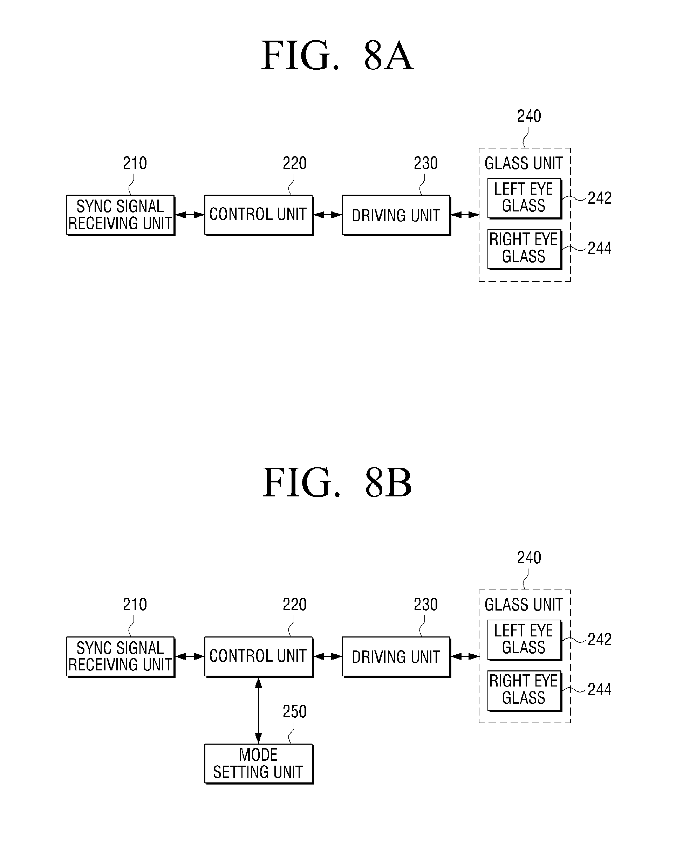

FIGS. 8A and 8B are block diagrams for explaining configurations of the dual view glasses according to various exemplary embodiments.

FIG. 8A is a block diagram showing a configuration of the dual view glasses according to an exemplary embodiment.

Referring to FIG. 8A, the dual view glasses 200 is provided with a sync signal receiving unit 210, a control unit 220, a driving unit 230, and a glass unit 240. Here, the dual view glasses 200 may be operated in combination with the display apparatus having a dual view function, which provides a plurality of images to a plurality of users, respectively.

The sync signal receiving unit 210 receives a sync signal for 3D image from the sync signal processing unit 120 of the display apparatus 100 connected by wire or radio therewith and transmits it to the control unit 220. For example, the sync signal receiving unit 120 may be embodied to emit the sync signal by using infrared rays, and the sync signal receiving unit 210 may be embodied to receive it from the emitted infrared rays.

For instance, the sync signal transmitted to the sync signal receiving unit 210 from the sync signal receiving unit 120 may be a signal in which a high level and a low level are alternated according to display timings of images displayed on the display apparatus 100.

On the other hand, the sync signal received through the sync signal receiving unit 210 may be a sync signal for opening the dual view glasses in synchronization with a display timing of an image provided to a certain user among a plurality of users, which take the dual view function provided to them.

Or, the sync signal received through the sync signal receiving unit 210 may be sync signals for alternately opening a left shutter glass and a right shutter glass of the glass unit 240 in synchronization with display timings of a left eye image and a right eye image thus to allow the certain user to recognize an 3D image corresponding to the left eye image and the right eye image displayed on the display apparatus 100.

The control unit 220 controls a general operation of the dual view glasses 200. Particularly, the control unit 220 generates a control signal based on the sync signal received at the sync signal receiving unit 210 and transmits the generated control signal to the driving unit 230 to control the driving unit 230. In particular, basis of the sync signal, the control unit 220 controls the driving unit 230 to allow a driving signal for driving the glass unit 240 to be created at the driving unit 230.

The driving unit 230 may drive shutters of the glass unit 240. Alternatively, as occasion commands, it is possible for the driving unit 230 to be embodied to rotate the glasses of the glass unit 240.

As described above, the glass unit 240 is made up of a left eye shutter glass 242 and a right eye shutter glass 244. Also, the glass unit 240 opens and closes the respective glasses according shutter driving signals received from the driving unit 230.

The shutters of the left eye shutter glass 242 and the right eye shutter glass 244 may be embodied as liquid crystals, respectively. In other words, the glass unit 240 can open and close the shutters by using the liquid crystals of the left eye shutter glass 242 and the right eye shutter glass 244.

FIG. 8B is a block diagram showing a configuration of the dual view glasses according to another exemplary embodiment.

Referring to FIG. 8B, the dual view glasses 200 is provided with a sync signal receiving unit 210, a control unit 220, a driving unit 230, a glass unit 240 and a mode setting unit 250. Detailed explanations on portions, which among a configuration shown in FIG. 8B, are overlapped with that shown in FIG. 8A, will be omitted.

The mode setting unit 250 may set an operation mode of the glass unit 240 into a 3D mode or a dual view mode.

To be specific, the mode setting unit 250 may set the operation mode of the glass unit 240 to the 3D mode or the dual view mode according to a user command inputted through an input unit (not shown) or a predetermined event. Here, the input unit (not shown) may be embodied as buttons or the like for setting the modes.

In this case, the control unit 220 may control the driving unit 230 to change a state where the glass unit 240 is opened or closed according to the operation mode set by the mode setting unit 250.

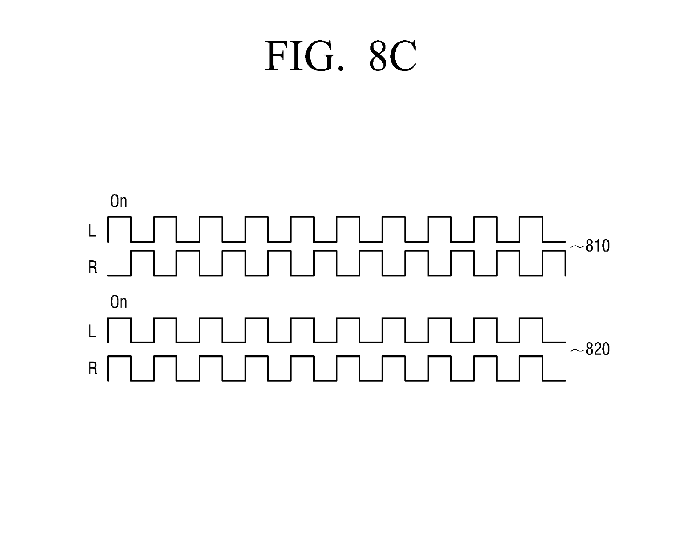

FIG. 8C is a view for explaining an operation mode of the dual view glasses according to an exemplary embodiments,

Referring to a timing chart 810 shown on an upper side of FIG. 8C, the dual view glasses alternately opens and closes the left eye glass and the right eye glass according to the sync signals corresponding to the display timings of the left eye image and the right eye image, thereby allowing the user to watch the 3D image.

Also, referring to a timing chart 820 shown on a lower side of FIG. 8C, the dual view glasses simultaneously opens and closes the left eye glass and the right eye glass according to the sync signals corresponding to the display timings of the left eye image and the right eye image, thereby allowing the user to watch the 2D image.

Although there is not shown in the drawings, the dual view glasses 200 may further include a power supplying unit (not shown). A power state of the power supplying unit may be controlled by the control unit 220.

In the exemplary embodiment as described above, the dual view glasses is explained as being driven in a shutter glass method, but that is only one example and it goes without saying that it may be also embodied in a polarization glass method. Hereinafter, the dual view glasses, which are embodied in the polarization glass method, will be explained in more detail.

For such dual view glasses, the display unit 110 is provided with a polarization film (or a polarization sheet, a polarization switching panel, etc.) capable of switching a polarization direction, and may provide different polarization directions to displayed left and right eye images by switching the polarization direction of the polarization film.

To be specific, the display unit 110 may be embodied, so that the polarization direction of the polarization film is switched to a first polarization direction if the left eye image is displayed and a second polarization direction if the right eye image is displayed. Here, the polarization film may be embodied by an active retarder, which is not divided by N.

The control unit 130 may control the switching operation for polarization direction of the polarization film to have the first polarization direction if the left eye image is displayed and the second polarization direction if the right eye image is displayed.

In other words, the control unit 130 may switch the polarization direction of the polarization film of the display unit 110 to the first polarization direction corresponding to a left eye polarized component of the dual view glasses if the left eye image is displayed on the display unit 110. Here, the left eye polarized component may be, for example, a left circularly polarized component, a left elliptically polarized component, etc.

Also, the control unit 130 may switch the polarization direction of the polarization film of the display unit 110 to the second polarization direction corresponding to a right eye polarized component of the dual view glasses if the right eye image is displayed on the display unit 110. Here, the right eye polarized component may be, for example, a right circularly polarized component, a right elliptically polarized component, etc.

On the other hand, the dual view glasses may be embodied as passive type polarization glasses in which the left and the right eye polarized components has different polarization. The passive type polarization glasses have an advantage in that it is relatively light and cheap as compared with the active type glasses, that is, the shutter glasses.

Hereinafter, the dual view glasses which are embodied in the polarization glass method will be explained in more detail with reference to FIG. 5 as an example.

In FIG. 5, the control unit 130 may control a switching operation of the polarization switching panel to display a left eye image 510 and a right eye image 520 in the first polarization and the second polarization direction. And, after transmitting the left eye image 510 or the right eye image 520, the control unit 130 controls to transmit a removal image 530 thus to allow a first user not to recognize any one of the left eye image 510 and the right eye image 520.

In other words, in the example of FIG. 5, the control unit 130 controls to transmit the images to the display unit 110 in a chronological order of 'the left eye image 510 of the first polarization direction → the right eye image 520 of the second polarization direction → the removal image 530 for the right eye image 520 of the second polarization direction → ...'.

Accordingly, since the right eye image 520 of a 3D image corresponding to a specific content is offset by the removal image 530 (525), the first user who does not wear the dual view glasses watches only the left eye image for specific content, so that she can watch a 2D image 540 for specific content that she wants to.

On the other hand, a second user who wears the dual view glasses, that is, the passive type polarization glasses in which the left and the right eye polarized components has different polarization alternately sees the left eye image 510 and the right eye image 520 according to the polarization directions, so that she can watch a 3D image 550 for specific content.

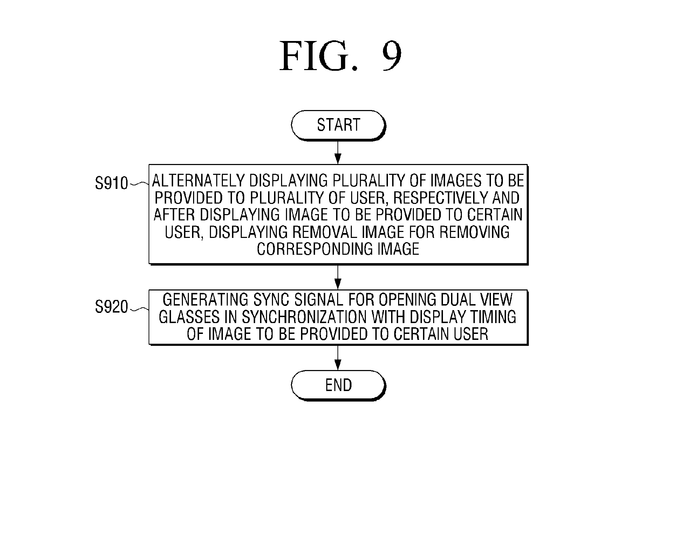

FIG. 9 is a flowchart for explaining a control method of the display apparatus according to an exemplary embodiment.

According to the control method of the display apparatus having the dual view function for providing the plurality of images to the plurality of users, first, the plurality of images to be provided to the plurality of users, respectively, is alternately displayed, and after an image to be provided to a certain user among the plurality of users is displayed, a removal image for removing the corresponding image is displayed (S 910).

And then, a sync signal for opening the dual view glasses is generated in synchronized with a display timing of the image provided to the certain user and transmitted to the dual view glasses (S920).

Further, in the step S910, a left eye image and a right eye image may be alternately outputted, and after the left eye image or the right eye image is displayed, a removal image may be displayed thus to allow other user to recognize any one of the left eye image and the right eye image.

In this case, in the step S920, sync signals for alternately opening the left eye shutter glass and the right eye shutter glass of the dual view glasses may be generated and transmitted in synchronization with display timings of the left eye image and the right eye image thus to allow the certain user to recognize an 3D image corresponding to the left eye image and the right eye image.

Also, in the step S910, an image for first content and left and right eye images for second content are alternately outputted, and after the left and the right eye images are displayed, removal images may be displayed thus to allow other user not to recognize the left and the right eye images for second content.

In this case, in the step S920, sync signals for alternately opening the left eye shutter glass and the right eye shutter glass of the dual view glasses may be generated and transmitted in synchronization with display timings of the left and the right eye images thus to allow the certain user to recognize an 3D image according to the left and the right eye images for second content.

Here, the removal image may be an inversion image for the image provided to the certain user.

In addition, calculating a maximum value of pixels forming the image provided to the certain user, calculating a calibrated maximum value of pixels based on maximum values of pixels calculated to a present image and a previous image provided to the certain user, and creating the inversion image by computing an output of the filtering unit and the image provided to the certain user may be further performed.

The calculating the calibrated maximum value may include calculating the calibrated maximum value by using the following mathematic formula:

$$Max_{out} = Max(View2)_{pre} + Max(View2)_{cur}$$

Here, View2 is the image provided to the certain user, $Max(View2)_{pre}$ is the maximum value of pixels for the previous image, and $Max(View2)_{cur}$ is the maximum value of pixels for the present image.

Further, after the removal image is displayed, displaying a black image may be performed.

Here, the plurality of images may be images having different contents.

On the other hand, according to a driving method of the dual view glasses operated in combination with the display apparatus having the dual view function for providing the plurality of images to the plurality of users includes receiving a sync signal from the display apparatus, first.

And then, the glass unit including the left eye glass and the right eye glass may be driven to change a state where it is opened or closed according to the received sync signal. Here, the sync signal may be a sync signal for opening the dual view glasses in synchronization with display timing of an image provided to a certain user among the plurality of user.

Also, the glass unit may be driven to set an operation mode thereof in one of the 3D mode and the dual view mode and to change the state where it is opened or closed according to the set operation mode.

According to this, even in dual view watching, only an additional viewer can extend a visual point through dual view glasses while an existing viewer is maintaining a present watching state. As a result, the number of the glasses required in the dual view watching can be reduced.

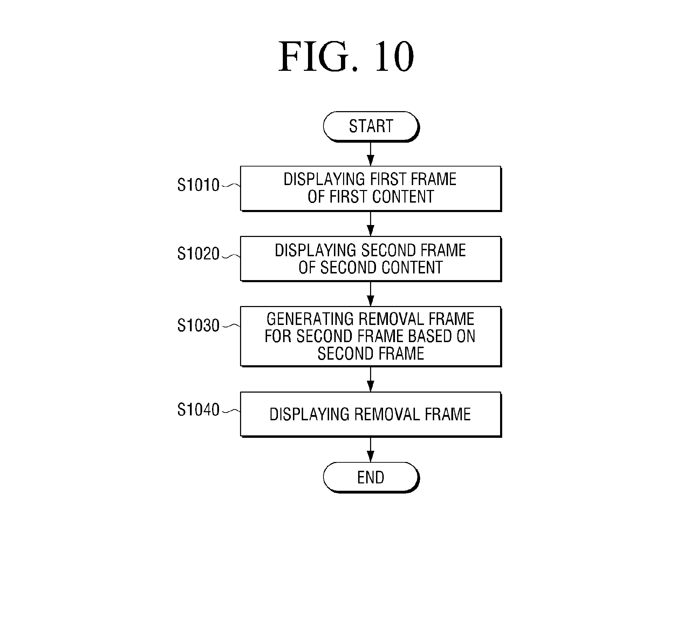

FIG. 10 is a flowchart for explaining a method for providing the dual view mode according to an exemplary embodiment. In other words, FIG. 10 is a flowchart for explaining an example of a dual view display method for displaying first and second contents to first and second users, respectively.

First, a first frame of first content is displayed (S1010).

Subsequently, a second frame of second content is displayed (S1020).

And then, a removal frame for the second frame is created on the basis of the second frame (S1030). Here, the removal frame may be created by using an inversion frame for the second frame and the inversion frame may be created by a difference between a predetermined pixel value and a pixel value of the second frame.

After that, the removal frame is displayed (S1040).

On the other hand, in the exemplary embodiment, a specific luminance frame may be displayed. Here, the specific luminance frame may include a black frame.

Further, a sync signal synchronized with the second frame may be transmitted by radio waves.

Moreover, a polarization switching panel may be switched to display images having different polarization directions according to display timings of the first and the second frames.

Also, the first frame may be one of a pair of stereoscopic images of the second frame.

The methods described above may be embodied by the display apparatus according to the exemplary embodiment or other display apparatuses not having all components of the display apparatus according to the exemplary embodiment.

Further, another exemplary embodiment may include a computer-readable recording medium including a program for running the dual view display method as described above. The computer-readable recording medium includes all sorts of recording apparatuses in which data being readable by a computer system is stored. As examples of the computer-readable recording medium, there are a ROM, a RAM, a CD-ROM, a magnetic tape, a floppy disk, an optical data storing apparatus, etc. Further, computer-readable recording media may be distributed in computer systems connected through a network, so that they can store and execute codes readable by the computer in a distributed method.

As described above, although the present invention has been explained by the exemplary embodiments, it should not be limited to the foregoing exemplary embodiments. The present teaching can be readily applied to other types of apparatuses and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

**Claims**

1. A dual view display method for displaying a first content to a first user and displaying a second content to a second user, the method comprising:

   displaying a first frame of the first content (S1010);
   displaying a second frame of the second content (S1020);
   creating a removal frame for the second frame based on the second frame (S1030); and
   displaying the removal frame (S1040).

2. The method of claim 1, wherein the creating of the removal frame comprises using an inversion frame for the second frame.

3. The method of claim 2, wherein the inversion frame is created based on a difference between a predetermined pixel value and a pixel value of the second frame.

4. The method of any of claims 1 to 3, further comprising: displaying a luminance frame.

5. The method of claim 4, wherein the luminance frame comprises a black frame.

6. The method of any of claims 1 to 5, further comprising:

   transmitting a sync signal synchronized with the second frame by radio waves.

7. The method of any of claims 1 to 6, further comprising:

   switching a polarization switching panel to display images having different polarization, wherein the switching is performed directions according to display timings of the first and the second frames.

8. The method of any of claims 1 to 7, wherein the first frame comprises one of a pair of stereoscopic images of the second frame.

9. A display apparatus having a dual view function providing a plurality of images to a plurality of users, the apparatus comprising:

   a display unit (110) configured to alternately output the plurality of images;
   a sync signal processing unit (120) configured to generate a sync signal which controls whether dual view glasses (200) are opened, and configured to transmit the sync signal to the dual view glasses; and
   a control unit (130) configured to control a displaying of a removal image which removes an image provided to a user among the plurality of users after the image is displayed and configured to control the sync signal processing unit to generate the sync signal in synchronization with a display timing of the image provided to the user.

10. The apparatus of claim 9, wherein the display unit alternately outputs a left eye image and a right eye image, and
    wherein the control unit is further configured to control the generating of sync signals by the sync signal processing unit for alternately open a left shutter glass and a right shutter glass of the dual view glasses in synchronization with display timings of the left eye image and the right eye image, and to further configured to control display the removal image after the left eye image or the right eye image.

11. The apparatus of claim 9 or 10, wherein the display unit alternately outputs a first image for first content and left and right eye images for second content, and wherein the control unit controls the sync signal processing unit to generate sync signals for alternately opening a left shutter glass and a right shutter glass of the dual view glasses in synchronization with display timings of the left and the right eye images, and to display the removal image after the left and the right eye images are displayed.

12. The apparatus of any of claims 9 to 11, wherein the removal image comprises an inversion image for the image provided to the user.

**13.** The apparatus of claim 12, further comprising:

> a calculation unit (151) configured to calculate a maximum value of pixels forming the image provided to the user;
> a filtering unit (152) configured to calculate a calibrated maximum value of pixels based on maximum values of pixels respectively calculated for a present image and a previous image provided to the user; and
> a removal image creating unit (153) configured to create the inversion image by computing a difference between an output of the filtering unit and the image provided to the user.

**14.** The apparatus of claim 13, wherein the filtering unit calculates the calibrated maximum value by using a formula:

$$\text{Max}_{out} = \text{Max}(\text{View2})_{pre} + \text{Max}(\text{View2})_{cur}$$

where View2 is the image provided to the user, $\text{Max}(\text{View2})_{pre}$ is a maximum value of pixels for the previous image, and $\text{Max}(\text{View2})_{cur}$ is the maximum value of pixels for the present image.

**15.** The apparatus of any of claims 9 to 11, wherein the control unit controls the display unit to display a black image after the removal image is displayed.

# FIG. 1

# FIG. 2

# FIG. 3A

100

140

150

110

| IMAGE RECEIVING UNIT | → | IMAGE PROCESSING UNIT | → | DISPLAY UNIT |

160

STORING UNIT ↔ CONTROL UNIT

130

170 USER INTERFACE UNIT

120

SYNC SIGNAL PROCESSING UNIT

# FIG. 3B

151

152

153

| MAXIMUM VALUE CALCULATING UNIT | → | FILTERING UNIT | → | REMOVAL IMAGE CREATING UNIT | →

# FIG. 4

WATCHING PICTURE
OF USER 1

WATCHING PICTURE
OF USER 2

# FIG. 5

# FIG. 6

USER 1

610    625    660

2D WATCHING

610   620   630   640   650  ....

Left

USER 2    On          On

Right

On          On

670

3D WATCHING

# FIG. 7

# FIG. 8A

240

210                    220                    230              GLASS UNIT

| SYNC SIGNAL RECEIVING UNIT | ⟷ | CONTROL UNIT | ⟷ | DRIVING UNIT | ⟷ | LEFT EYE GLASS ~242 |
| | | | | | | RIGHT EYE GLASS ~244 |

# FIG. 8B

240

210                    220                    230              GLASS UNIT

| SYNC SIGNAL RECEIVING UNIT | ⟷ | CONTROL UNIT | ⟷ | DRIVING UNIT | ⟷ | LEFT EYE GLASS ~242 |
| | | | | | | RIGHT EYE GLASS ~244 |

250

MODE SETTING UNIT

# FIG. 8C

# FIG. 9

START

S910 — ALTERNATELY DISPLAYING PLURALITY OF IMAGES TO BE PROVIDED TO PLURALITY OF USER, RESPECTIVELY AND AFTER DISPLAYING IMAGE TO BE PROVIDED TO CERTAIN USER, DISPLAYING REMOVAL IMAGE FOR REMOVING CORRESPONDING IMAGE

S920 — GENERATING SYNC SIGNAL FOR OPENING DUAL VIEW GLASSES IN SYNCHRONIZATION WITH DISPLAY TIMING OF IMAGE TO BE PROVIDED TO CERTAIN USER

END

# FIG. 10

START

S1010 — DISPLAYING FIRST FRAME
OF FIRST CONTENT

S1020 — DISPLAYING SECOND FRAME
OF SECOND CONTENT

S1030 — GENERATING REMOVAL FRAME
FOR SECOND FRAME BASED ON
SECOND FRAME

S1040 — DISPLAYING REMOVAL FRAME

END

Europäisches
Patentamt

European
Patent Office

Office européen
des brevets

# EUROPEAN SEARCH REPORT

Application Number

EP 12 16 9669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/085373 A1 (MIYASAKA DAIGO [JP] ET AL) 8 April 2010 (2010-04-08) | 1-4,6,7, 9,12-14 | INV. H04N13/04 G02B27/22 |
| Y | * abstract; figures 3, 9, 10 * * the whole document * | 5,8,10, 11,15 | |
| Y | US 2010/188488 A1 (BIRNBAUM DANIEL A [US] ET AL) 29 July 2010 (2010-07-29) | 8,10,11 | |
| A | * abstract; figure 1 * * paragraphs [0027], [0060] * * the whole document * | 1-7, 12-15 | |
| Y | US 2009/262127 A1 (MIYASAKA DAIGO [JP] ET AL) 22 October 2009 (2009-10-22) | 5,15 | |
| A | * paragraph [0068] * * the whole document * | 1-4,6-14 | |

| TECHNICAL FIELDS SEARCHED (IPC) |
|---|
| H04N G02B |

The present search report has been drawn up for all claims

| Place of search | Date of completion of the search | Examiner |
|---|---|---|
| Munich | 16 August 2012 | Prange, Stefan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 12 16 9669

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2012

| Patent document cited in search report | | Publication date | Patent family member(s) | | Publication date |
|---|---|---|---|---|---|
| US 2010085373 | A1 | 08-04-2010 | CN<br>US<br>WO | 101589421 A<br>2010085373 A1<br>2008090851 A1 | 25-11-2009<br>08-04-2010<br>31-07-2008 |
| US 2010188488 | A1 | 29-07-2010 | NONE | | |
| US 2009262127 | A1 | 22-10-2009 | CN<br>US<br>WO | 101501745 A<br>2009262127 A1<br>2008015905 A1 | 05-08-2009<br>22-10-2009<br>07-02-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110050941